# EUROPÄISCHE PATENTSCHRIFT

(11) **EP 0 523 070 B1**
(45) Veröffentlichungstag und Bekanntmachung des Hinweises auf die Patenterteilung: **13.12.1995**
(21) Anmeldenummer: 91905474.2
(22) Anmeldetag: 19.03.1991
(51) Int. Cl.: G01N 29/00

(54) **VERFAHREN UND VORRICHTUNG ZUR ULTRASCHALLPRÜFUNG VON SCHWEISSNÄHTEN ZWISCHEN KUNSTSTOFFPACKUNGEN UND ABDECKFOLIEN**
PROCESS AND DEVICE FOR THE ULTRASONIC TESTING OF WELDS BETWEEN PLASTICS PACKAGING AND COVER FOILS
PROCEDE ET DISPOSITIF DE CONTROLE PAR ULTRA-SONS DES SOUDURES ENTRE DES EMBALLAGES EN PLASTIQUE ET DES FEUILLES DE FERMETURE

(30) Priorität: 05.04.1990 DE 4010952
(43) Veröffentlichungstag der Anmeldung: 20.01.1993
(73) Patentinhaber: Schmalbach-Lubeca AG, 38112 Braunschweig (DE); MPV MESS- UND PRÜFTECHNIK INGENIEURBÜRO, DIPL.-ING. G. VOGT, D-30659 Hannover (DE); ALTHAUS, P. Gerhard, D-30519 Hannover (DE)
(72) Erfinder: ALTHAUS, P., Gerhard, D-3000 Hannover 81 (DE); ISENBERG, Heinz, Henning, D-3300 Braunschweig (DE); VOGT, Göran, D-3006 Burgwedel-Wettmar (DE)
(74) Vertreter: Fricke, Joachim, Dr.
(86) Internationale Anmeldenummer: DE9100232
(87) Internationale Veröffentlichungsnummer: WO9115759

(56) Entgegenhaltungen:
- EP-A- 0 039 494
- US-A- 3 384 733
- IBM Technical Disclosure Bulletin vol. 32, no. 1, Juni 1989, Amonk, NY, US, Seiten 258-259: "Inspection of adhesion in magneto-optic thin film structures"

## Beschreibung

Die Erfindung bezieht sich auf ein Verfahren zur Ultraschallprüfung von Schweißnähten zwischen Kunststoffpackungen - in Form von Tellern - und Deckelfolien, die auch Abdeckfolien genannt werden, für Fertiggerichte, sowie auf eine Vorrichtung zur Durchführung dieses Verfahrens.

Schalenförmige Kunststoffpackungen sind in unterschiedlicher Formgebung für die Verpackung von Lebensmitteln bekannt. Nach dem Befüllen werden sie mittels einer Deckelfolie, die erst unmittelbar vor dem Verzehr wieder entfernt wird, versiegelt. Die Haltbarkeit der so verpackten Lebensmittel hängt u. a. von der Dichtheit der Schweißnaht zwischen Deckelfolie und schalenförmiger Kunststoffpackung ab. Beim Aufbringen der Folie auf den Rand der Packung kommt es immer wieder vor, daß sich Falten bilden, Kunststoffpartikel eingeschweißt werden,. Wölbungen auftreten oder Lebensmittelpartikel sich zwischen Deckelfolie und Packung befinden. Liegt an derartigen Stellen keine Bindung zwischen Kunststoffpackung und Deckelfolie vor, so ist die Packung nicht geschlossen und können durch die Fehlstellen Sauerstoff und Verschmutzungen zum verpackten Lebensmittel gelangen. Andererseits kann das Lebensmittel auslaufen usw.. Damit größere Sicherheit besteht, daß das verpackte Lebensmittel bis zum angegebenen Verfalldatum, das auf die Packung aufgedruckt ist, lebensmittelrechtlich unbedenklich ist, muß daher sichergestellt sein, daß die Schweipnaht vollständig geschlossen umläuft, also keine Fehlstellen in der Schweißnaht vorliegen.

Hier setzt die Erfindung ein. Sie hat es sich zur Aufgabe gemacht, ein Verfahren und eine Vorrichtung zur Schweißnahtprüfung bei Schweißnähten der eingangs genannten Art anzugeben. Sie verfolgt dabei das Ziel, die Schweißnahtprüfung einerseits mit großer Genauigkeit und Reproduzierbarkeit, andererseits aber möglichst rasch auszuführen.

Erfindungsgemäß wird diese Aufgabe gelöst durch ein Verfahren mit den Merkmalen des Patentanspruchs 1 sowie durch eine Vorrichtung nach Patentanspruch 8.

Es hat sich überraschend gezeigt, daß durch Bündelung eines im Querschnitt relativ kleinen Ultraschallstrahls ausschließlich auf die Schweißnaht sehr verläßliche Aussagen über die Qualität dieser Schweißnaht gemacht werden können. Da ausschließlich die Schweißnaht durchschallt wird, gehen Randeffekte des Bereichs beidseitig der Schweißnaht, wo sich zwischen Deckelfolie und Packung Luftbläschen, Lebensmittelstücke oder sonstige Teile befinden können, nicht in das Meßergebnis ein. Aufgrund der Überlappung der Durchschallungsflecke entlang der Schweißnaht wird eine kontinuierliche Überprüfung erzielt. Die Überlappung kann relativ weit getrieben werden, beispielsweise über 50 % betragen, so daß ein und derselbe Punkt einer Schweißnaht mehrfach geprüft wird. Aufgrund der senkrechten Durchschallung, die beim Ablauf des Verfahrens und beim Betrieb der Vorrichtung durch geeignete Maßnabmen sichergestellt wird, wird erreicht, daß von Fehlstellen stammende Signale deutlich unterschieden werden können von Signalen, die von normalen Schwankungen im Bereich der Meßanordnung, beispielsweise in der Dicke des Tellerrandes usw. stammen. Hierbei macht sich vorteilhaft bemerkbar, daß Fehlstellen abrupte Änderungen des Ultraschallsignals bewirken, auch wenn die Änderung klein sein mag, während geometrische Abweichungen keine spontane Änderung der Signalamplitude bewirken. Schwankungen in der Amplitude des ausgesandten Ultraschallimpulses können durch ausreichend starke Überlappung der Durchschallungsflecke ausgemittelt werden. Die Relativbewegung zwischen Kunststoffpackung und Ultraschallprüfeinrichtung muß schließlich so erfolgen, daß die gesamte, eine geschlossene Kurve bildende Schweißnaht mit Sicherheit einmal abgetastet wird.

Das erfindungsgemäße Verfahren und die dazugehörende Vorrichtung ermöglichen eine relativ rasche Überprüfung einer Schweißnaht, es kann beispielsweise in weniger als einer Sekunde die Schweißnahtprüfung der Schweißnaht zwischen einem Teller eines Fertiggerichtes und der zugehörigen Deckelfolie durchgeführt werden. Dies wiederum hat den Vorteil, daß die erfindungsgemäße Vorrichtung in bereits bestehende Verpackungsanlagen integriert werden kann, ohne die Taktzeit einer derartigen Anlage reduzieren zu müssen. Verfahrensmäßig wird hierbei in einer Weiterentwicklung vorgeschlagen, daß die Ultraschallprüfung mit einer eigenen, unabhängig von der Taktzeit der eigentlichen Verpackungsanlage laufenden Taktsteuerung erfolgt. Hierdurch entfallen Verbindungen oder eine Zuordnung zur eigentlichen Verpackungsanlage und kann die Prüfung relativ rasch ein- und abgeschaltet werden. Verfahrensmäßig werden die verschweißten Packungen auf einem Förderband bewegt, sie gelangen vor der Ultraschallprüfung an eine Schikane, die die Packungen einzeln in die Ultraschallprüfanlage ablenkt. Dort werden die Schweißflähte geprüft, wobei der Gesamtdurchlauf wenige Sekunden, beispielweise drei Sekunden, benötigt. Anschließend werden die Packungen wieder auf das Förderband gehoben. Erst auf dem Förderband werden undichte Packungen aussortiert, Packungen mit intakten Schweißnähten bleiben dagegen auf dem Förderband. Die akustische Ankopplung des sendenden und auch des empfangenden Ultraschallprüfkopfs erfolgt über eine Wasservorlaufstrecke Entweder befinden sich beide Prüfköpfe in einem Wasserbad, in das auch die Schweißnaht, zumindest auf dem aktuell geprüften Teilbereich, eingetaucht ist, oder die Ankopplung erfolgt durch Wasserstrahlen, d. h. es werden beispielsweise Prüfköpfe verwendet, wie sie aus den US-Patenten 3,255,626; 3,485,088; 3,908,455 und 4,403,510 oder der europäischen Patentschrift 119 096 bekannt sind. In beiden Fällen (Tauchverfahren oder Ankopplung über Wasserstrahlen) hat es sich als günstig erwiesen, in einer Wanne zu arbeiten, um das Wasser aufzufangen bzw. zu halten.

Vorrichtungsmäßig hat sich eine sogenannte "Bypass-Anlage" sehr bewährt. Sie kann an bestehende Verpackungsanlagen angeschlossen werden, es wird lediglich eine kurze Strecke Förderband benötigt, an die die Anlage geschoben werden kann.

Vorrichtungsmäßig ist die Prüfung von runden Kunststoffpackungen deshalb besonders einfach und vorteilhaft, weil hierbei lediglich die tellerförmige Packung um ihre eigene Achse gedreht werden muß, wobei die Ultraschallprüfstrecke ortsfest bleiben kann. Nach dem erfindungsgemäßen Verfahren lassen sich jedoch auch unrunde Packungen prüfen. Dabei wird die zu prüfende Packung in eine angepaßte Aufnahme eingebracht, diese Aufnahme sichert die geometrische Zuordnung. Die Aufnahme wird mit der Packung um ein Quasizentrum gedreht. Zusätzlich wird die Ultraschall-Prüfstrecke in Querrichtung zur Transportrichtung 44 bewegt, wodurch Abweichungen von der Kreisform abgefahren werden können. Schließlich können rechteckförmige Packungen auch dadurch geprüft werden, daß rechtwinklig zur linearen Transportrichtung verlaufende Schweißnahtbereiche durch in Transportrichtung mitgeführte, aber gleichzeitig querbewegte Prüfköpfe erfaßt werden.

Entscheidend für die Schweißnahtprüfung hat sich die Durchschallung herausgestellt, eine Prüfung auf reflektierte Schallsignale gibt keine zufriedenstellenden Ergebnisse.

Nun ist zwar die Ultraschallprüfung von verpackten Lebensmitteln grundsätzlich aus der EP-A-269 185 bekannt. Dabei wird das in der Lebensmittelpackung befindliche Lebensmittel selbst durchschallt, um durch Gärung entstandene Gasbläschen erfassen zu können, bevor die Gärung so weit fortgeschritten ist, daß sich die Packung merkbar aufgewölbt hat. Es findet keine vorbeugende Prüfung, statt die unmittelbar am Anschluß an das Einfüllen des Lebensmittels in die Verpackung durchgeführt werden kann, sondern es muß bereits eine Verschlechterung des verpackten Lebensmittels aufgrund Gärung eingetreten sein, damit die vorbekannte Ultraschallprüfung ein Auslesekriterium hat. Eine Schweißnahtprüfung wird nicht durchgeführt.

Unter einer wechselseitigen Überlappung der Durchschallungsflecke der einzelnen Ultraschallimpulse wird eine Überdeckung eines ersten Schallimpulses mit einem nachfolgenden Schallimpuls von mindestens 2 %, vorzugsweise zumindest 20 % der durchstrahlten Fläche der Schweißnaht verstanden. Die wechselseitige Überlappung ist üblicherweise kleiner als 100 %. Eine 100 %-ige Überlappung liegt dann vor, wenn exakt diegleiche Fläche nocheinmal durch einen nachfolgenden Impuls durchstrahlt wird.

Als sehr vorteilhaft haben sich unrunde Durchschallungsflecke erwiesen, deren Querschnittsabmessungen länger als breit sind, beispielsweise oval ausgebildet sind. In diesem Fall soll die größere Längenabmessung des Durchschallungsflecks im wesentlichen parallel zum Verlauf der Schweißlinie liegen.

Weitere Vorteile und Merkmale der Erfindung ergeben sich aus den übrigen Ansprüchen sowie der nun folgenden Beschreibung eines nicht einschränkend zu verstehenden Ausführungsbeispiels, das unter Bezugnahme auf die Zeichnung näher erläutert wird. In dieser zeigen:
- Fig. 1: eine schnittbildliche Seitenansicht einer Prüfvorrichtung, bei einem Schnitt entlang der Schnittlinie I - I in Fig. 2,
- Fig. 2: einen Schnitt entlang der Schnittlinie II - II in Fig. 1,
- Fig. 3: eine Stirnansicht der Prüfvorrichtung mit Förderband und einem Wasserbecken,
- Fig. 4: ein Schnittbild entlang der Schnittlinie IV - IV in Fig. 1 und
- Fig. 5: ein Schnittbild entlang der Schnittlinie V - V in Fig. 1.

Auf einem quer zur Zeichenebene bewegten, in die Zeichenebene hinein transportierenden Förderband 20 befinden sich hintereinander gefüllte und mit Deckelfolien verschlossene Kunststoffpackungen 22. Sie werden gegen eine schräg gestellte Schikane 24 gefördert, die sie aus ihrer Bahn auslenkt und, wie an der Packung 23 dargestellt ist, in die im folgenden zu beschreibende Ultraschall-Prüfeinrichtung rutschen läßt. Soll die Ultraschallprüfung nicht durchgeführt werden, wird die Schikane 24 vollständig aus dem Weg der Packungen 22 weggeschwenkt.

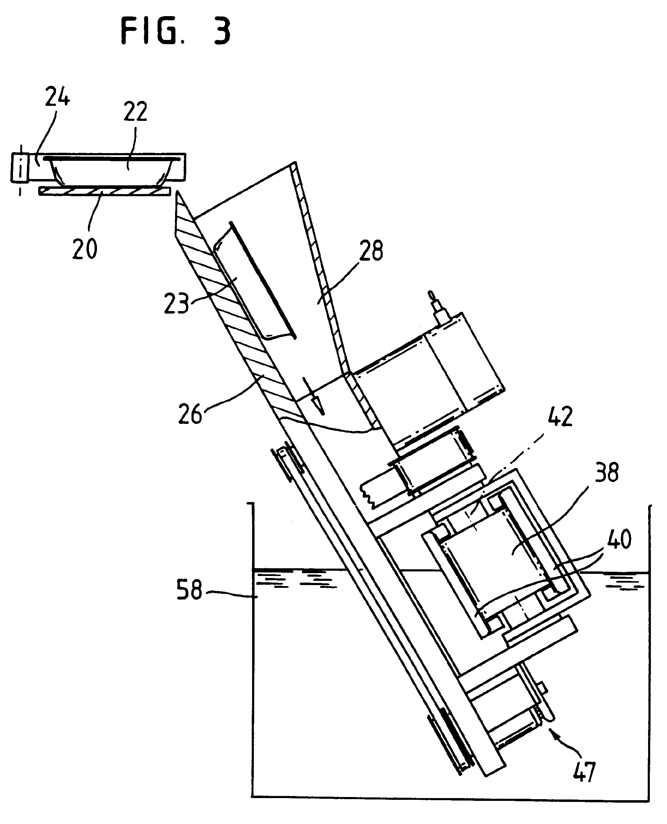

Wie insbesondere Fig. 3 zeigt, bildet die Ultraschall-Prüfeinrichtung einen Einlauftrichter aus, der begrenzt wird von einer Platte 26 und einem U-förmigen Leitblech 28. Die Platte 26 nimmt, wie im folgenden beschrieben wird, alle Teile der Vorrichtung auf, sie ist im Winkel von 30 Grad zur Vertikalen geneigt, auf ihr gleiten die Packungen 22 mit ihrer Bodenseite, mithin befindet sich die Deckelfolie geschützt im Abstand von der Oberfläche der Platte 26. Bei 32 befindet sich die Schweißnaht, deren Dichtheit zu prüfen ist.

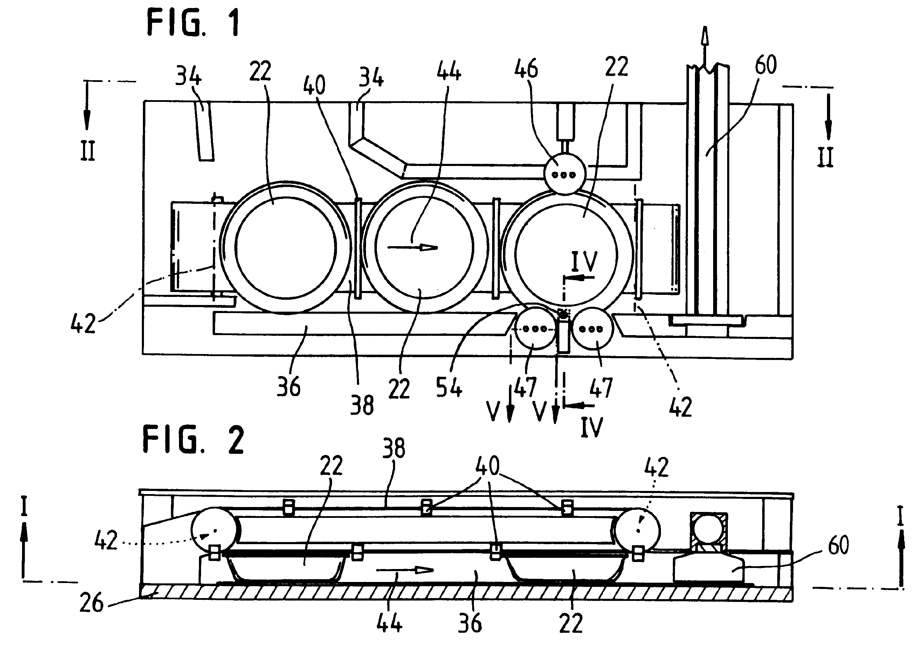

Durch Teile des Leitblechs 28, die quer zur Förderrichtung des Förderbandes 20 stehen, wird die zu prüfende Packung 22 zwischen Führungsbacken 34 hindurchgeleitet und fällt in den Bereich zwischen einem Transportband 38 und der Platte 26. Auf dem Transportband 38 sind in auf die Packung 22 abgestimmten Abständen Mitnehmer 40 vorgesehen. Die Anordnung ist so getroffen, daß die Packung nur jeweils zwischen zwei Mitnehmern 40 in den Raum zwischen Transportband 38 und Platte 26 rutschen kann. Die Mitnehmer 40 stehen soweit zur Platte 26 vor, daß eine herunterrutschende Packung zunächst auf sie aufschlägt und erst dann weiter durchrutscht, wenn ein ausreichend breiter Spalt zwischen zwei Mitnehmern 40 für sie frei ist, diesen Zustand zeigen die Figuren 1 und 2. Nach unten hin wird die Packung 22 durch eine Stützleiste 32 abgestützt. Sie ist so angeordnet, daß der Mittelpunkt der im gezeigten Ausführungsbeispiel kreisrunden Packungen 22 auf der Mittellinie des Transportbandes 38 liegt.

In einer geänderten Verfahrensführung kann das Transportband 38 auch in der in den Figuren 1 und 2 gezeigten Position solange angehalten werden, bis eine Packung 22 sich in der ganz links gezeigten Position befindet.
Das Transportband 38 läuft geschlossen um, es wird hierzu über zwei Rollen 46, 47, von denen mindestens eine angetrieben ist, geführt, sie rotieren um Achsen 42, die parallel zur Fläche der Platte 26 verlaufen. Wie aus den Figuren 1 und 2 ersichtlich ist, ist der Abstand 42 zwischen den Achsen etwas größer als der dreifache Durchmesser der Packungen 22.

Das Transportband 38 transportiert die Packungen in den Figuren 1 und 2 nach rechts, im Sinne des Pfeiles 44. Sie gelangen in eine Zwischenposition, die in Figur 1 als mittlere Position für die Packungen 22 eingezeichnet ist, und schließlich in die eigentliche Prüfposition, die in den Figuren 1 und 2 rechts gezeichnet ist. Dabei werden sie nach oben durch entsprechend fortgeführte, nunmehr horizontal verlaufende Führungsbacken 34 gehalten und liegen unten auf der Stützleiste 36 auf.

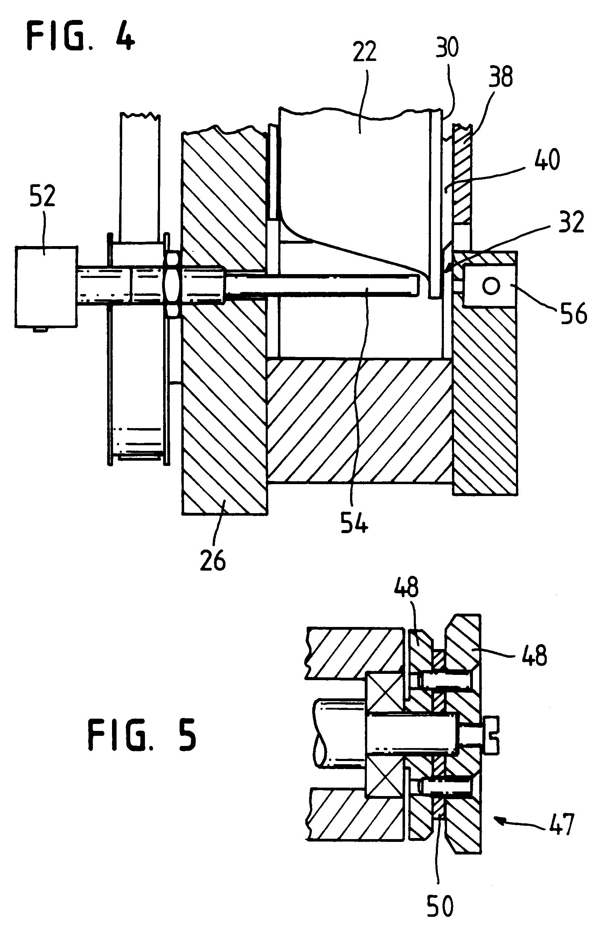

Die Ultraschall-Prüfposition hat drei angetriebene, gekerbte Rollen, 46, 47, von denen eine in Figur 5 im Schnitt dargestellt ist. Wie aus Fig. 1 ersichtlich ist, befinden sich in Fortführung der Stützleiste 36 zwei untere Rollen 47 in einem Abstand voneinander, der so eng gewählt ist, daß gerade noch die Ultraschallprüfeinrichtung, auf die im folgenden näher eingegangen wird, zwischen ihnen Platz hat. Sie sind in gleicher Höhe angeordnet.

Mittig oberhalb der beiden unteren Rollen 47 befindet sich eine einzelne Rolle 46. Die Mittelpunkte der Rollen 46, 47 stehen auf einem gleichschenkligen Dreieck, dessen Scheitelwinkel (bei der Rolle 46) möglichst spitz gewählt ist.

Die Rollen 46, 47 haben die Aufgabe, die Packungen 22 um ihren Mittelpunkt zu drehen und gleichzeitig exakt zu führen. Während der Drehbewegung der Packung 22 ruht der schubweise erfolgende Transport der Packungen 22 durch das Transportband 38.

Wie Fig. 1 zeigt, befinden sich in der Prüfposition die Packungen 22 etwas tiefer als zuvor, also solange sie durch die Stützleiste 36 abgestützt sind. Damit sie in den Raum zwischen den drei Rollen 46, 47 gelangen können, wird die obere Rolle 46 kurz angehoben, wozu (schematisch dargestellt) ein Zylinder oberhalb dieser Rolle 46 vorgesehen ist. Nach Absenken der Rolle 46 erfolgt der Drehantrieb.

Die drei baugleich ausgeführten Rollen 46, 47 bestehen im wesentlichen aus drei Scheiben, nämlich zwei äußeren, angeschrägten Führungsscheiben 48 und einer mittigen, außenseitig gerändelten Mitnehmerscheibe 50. Letztere nimmt an ihrem Außenrand den Tellerrand reibschlüssig mit und ist so dick gewählt, daß der Tellerrand mit darauf befindlicher Deckelfolie möglichst mit wenig Spiel zwischen den beiden Führungsscheiben 48 erhalten wird.

Im folgenden wird die Ultraschallprüfung insbesondere unter Bezug auf Fig. 4 beschrieben. In einer Bohrung der Platte 26 ist ein Sendeprüfkopf 52 befestigt, der mit hoher Pulsfolgefrequenz, beispielsweise 1 bis 5 KHz, kurzzeitige Ultraschallimpulse einer Frequenz von beispielsweise 10 MHz aussendet. Auf ihn ist ein Schallführungsrohr 54 mit einem Innendurchmesser von 3 mm aufgesetzt, das bis unmittelbar in die Nähe des Tellerrandes ragt. Es ist an seinem freien Austrittsende oval verformt, wobei die Längsrichtung des Oval mit der Richtung der zu prüfenden Schweißnaht zusammenfällt. Dadurch hat der Durchschallungsfleck auf der Schweißnaht eine Abmessung, die etwa 2 bis 2,5 mm in Querrichtung zum Längsverlauf der Schweißnaht beträgt. Hierdurch und durch die exakte geometrische Zuordnung zwischen Schallführungsrohr 54 und Rand der Packung 22 mit dort befindlicher Schweißnaht wird erreicht, daß immer nur der eigentliche Schweißnahtbereich durchschallt wird. Die geometrische Zuordnung wird dabei im wesentlichen durch die sich in unmittelbarer Nachbarschaft der Ultraschallprüfung befindenden zwei unteren Rollen 47 gewährleistet.

Die Ultraschallimpulse, die den Rand der Packung 22 und die Deckelfolie im Bereich der Schweißnaht durchquert haben, werden von einem Empfangsprüfkopf 56 aufgenommen. Die Umfangsgeschwindigkeit, mit der die Packung 22 gedreht wird und die Wiederholungsfrequenz, mit der die Ultraschallimpulse vom Sendeprüfkopf 52 ausgesandt werden, sind so aufeinander abgestimmt, daß die ovalen Durchschallungsflecke auf der Schweißnaht einander wechselseitig überlappen.

Die Erzeugung und Auswertung der Ultraschallimpulse ist ansich bekannt, hier kann auf den Stand der Technik verwiesen werden. Bei der praktischen Durchführung von Versuchen mit einer Art Packungen 22 hat es sich gezeigt, daß die Durchschallungssignale um 2 dB bedingt durch Abweichungen von der senkrechten Durchschallung des Randes der Packung 22 und sonstige Einflüsse schwanken, Änderungen oberhalb von 4 bis 6 dB können als Fehler der Schweißnaht angegeben werden. Zusätzlich kann als Entscheidungskriterium herangezogen werden, daß Fehlstellen zu abrupten Änderungen des Ultraschallsignales führen, während sonstige geometrische Änderungen langsamere Änderungen im Ultraschallsignal bewirken.

Im gezeigten Ausführungsbeispiel erfolgt die Ankopplung durch Wasser, hierzu befindet sich die Prüfeinrichtung, wie Fig. 3 zeigt, in einem Wassertank 58, der soweit gefüllt ist, daß zumindest die unteren, aktuell geprüften Bereiche der Tellerränder in das Wasser eintauchen.

Für die Prüfung wird die Packung 22 mindestens einmal um die eigene Achse gedreht. Steht genügend Zeit für die Prüfung zur Verfügung, so kann eine weitere Drehung angeschlossen werden. Nach erfolgter Ultraschallprüfung bewegt sich das Transportband 38 weiter, die Packung 22 gelangt in den Bereich einer Hebevorrichtung 60, die sie in Gegenrichtung zum oben beschriebenen Einfallvorgang wieder in die Ebene des Förderbandes 20 hebt, bis sie wieder auf dieses kippen kann. Die Packung nimmt dann wieder die Position ein, die in Fig. 3 für den Ausgangszustand gezeigt ist. Anschließend ist eine Schikane vorgesehen, die solche Packungen 22 aussortiert, die während der Ultraschallprüfung als fehlerhaft beurteilt wurden. In einer anderen Ausbildung kann die Hebevorrichtung auch zugleich für die Selektion guter und schlechter Packungen benutzt werden.

Die erfindungsgemäße Vorrichtung kann im Bypassbetrieb einer bereits bestehenden Verpackungsstraße zugeordnet werden. An- und Abbau ist mit wenigen Handgriffen zu erledigen. Bei zugeordneter Prüfeinrichtung kann für jede einzelnen Packung, die sich auf dem Förderband 20 befindet, entschieden werden, ob sie geprüft werden soll oder nicht, dies geschieht durch Steuerung der Schikane 24.

Um die Anlage einfach warten zu können, ist das Transportband 38 um eine seiner Achsen 42 ausschwenkbar angeordnet. Wenn man als Ankopplungsflüssigkeit auf Wasser (oder eine andere geeignete Flüssigkeit) verzichten möchte, vielmehr trocken messen möchte, ist es auch möglich, die Prüfköpfe 52, 56 in schleifendem Kontakt mit dem Rand der Packung 22 bzw. der Deckelfolie 30 zu halten. Auch Mischformen, also Ankopplung des Senderprüfkopfes 52 über Wasser, jedoch des Empfängerprüfkopfes durch schleifenden Kontakt oder dergleich sind möglich.

Höhere Prüffrequenzen, z. B. 15 MHz und darüber haben sich für die Prüfung als geeigneter erwiesen als geringere Frequenzen, beispielsweise 3 MHz. Erfindungsgemäß können beispielsweise auch Joghurtbecher, verpackte Medikamente etc. geprüft werden.

In einer geänderten Ausführung sind bei sonst gleicher, vorrichtungsmäßiger Ausbildung die Prüfköpfe 52, 56 durch Prüfköpfe ersetzt, wie sie aus den eingangs genannten vier US-Patentschriften sowie der EP-Patentschrift beispielsweise bekannt sind. Die Wasserstrahlen werden so von beiden Seiten auf die Schweißnaht 32 gerichtet, daß eine möglichst vollständige Überlappung auftritt, also der Ultraschallimpuls geradlinig durchlaufen kann. Die Prüfköpfe 52, 56 werden in bekannter Weise an einen Wasservorrat angeschlossen und aus diesem über eine Pumpe ständig mit Wasser versorgt. Ein Schallführungsrohr ist unter diesen Umständen nicht notwendig. Bis auf diese Änderungen kann dieselbe Vorrichtung wie oben beschrieben benutzt werden.

Verfahrensmäßig wird jedoch im Gegensatz zum oben beschriebenen Tauchverfahren bei Ankopplung über Wasserstrahlen der Wasserspiegel im Tank 58 so tief gehalten, daß die von den Prüfköpfen 52, 56 ausgehenden Wasserstrahlen sich oberhalb des Wasserspiegels befinden.

Die Durchschallungsflecke sind im allgemeinen rund, vorteilhaft ist aber die Verwendung länglicher Durchschallungsflecke, wobei sich die größere Abmessung der Durchschallungsflecke in Längsrichtung des Verlaufs der Schweißnaht befindet.

## Patentansprüche

1. Verfahren zur Ultraschallprüfung von Schweißnähten zwischen Kunststoffpackungen (22, 23) in Form von Tellern und Deckelfolien (30) für Fertiggerichte, bei dem (a) die Ultraschall-Prüfeinrichtung über eine Wasservorlaufstrecke in Form eines Wasserstrahls oder in einem Wasserbad akustisch an die Schweißnaht angekoppelt ist, die Schweißnaht periodisch mit Ultraschallimpulsen durchschallt wird und die durchgehenden Ultraschallimpulse empfangen und amplitudenmäßig bewertet werden, (b) der Ultraschallstrahl einen so geringen Querschnitt aufweist, daß ausschließlich der Bereich der Schweißnaht durchschallt wird, (c) Kunststoffpackung (22, 23) und Ultraschall-Prüfeinrichtung relativ zueinander bewegt werden, um die Schweißnaht auf ihrer gesamten Länge zu erfassen, (d) die Pulsfolgefrequenz der Ultraschallimpulse so gewählt ist, daß die Durchschallungsflecke der einzelnen Ultraschallimpulse sich wechselseitig überlappen und (e) für die auf einem Förderband (20) transportierten Packungen (22) eine Schikane vorgesehen ist, die während der Ultraschallprüfung als fehlerhaft beurteilte Packungen (22) auslenkt.

2. Verfahren nach Anspruch 1, dadurch gekennzeichnet, daß die Kunststoffverpackung (22, 23) als fehlerhaft bewertet wird, wenn eine abrupte Änderung des Ultraschallsignals erfaßt wird.

3. Verfahren nach Anspruch 1, dadurch gekennzeichent, daß die Packungen (22, 23) runde Teller sind, die um ihre eigene Achse gedreht werden.

4. Verfahren nach Anspruch 1, dadurch gekennzeichnet, daß der Ablauf einer Prüfung ausgelöst wird durch einen Steuerimpuls, der erhalten wird, wenn eine zu prüfende Packung (22, 23) in die Prüfvorrichtung gelangt ist und dann in einem Takt durchgeführt wird, der durch die Ultraschall-Prüfvorrichtung selbst bestimmt ist.

5. Verfahren nach Anspruch 1, dadurch gekennzeichnet, daß auf einem Förderband (20) transportierte, zu prüfende Packungen (22, 23) mittels einer Schikane (24) aus ihrer Förderrichtung ausgelenkt und in einen einleitenden Trichter der Ultraschall-Prüfeinrichtung fallen, und daß die geprüften Packungen (22, 23) mittels einer Hebevorrichtung (60) so angehoben werden, daß sie wieder auf ein Förderband (20) kippen.

6. Verfahren nach Anspruch 1, dadurch gekennzeichnet, daß bei der Prüfung die Ultraschall-Prüfeinrichtung bewegt wird und die Kunststoffpackung (22, 23) unbewegt bleibt.

7. Verfahren nach Anspruch 1, dadurch gekennzeichnet, daß die Durchschallung der Schweißnaht auf einem Durchschallungsfleck erfolgt, der unrund ist und eine geringere Höhe als Breite aufweist, wobei die Breitenrichtung im Verlauf der Schweißnaht (32) ausgerichtet ist.

8. Ultraschall-Prüfvorrichtung zum Durchführen des Verfahrens gemäß einem der vorhergehenden Ansprüche an schalenförmigen Kunststoffpackungen (22, 23) in Form von Tellern mit Deckelfolien (30) für Fertiggerichte, bei der
(a) drei Rollen (46, 47, 47) geometrisch so angeordnet sind, daß der Rand jeweils einer solchen Kunststoffpackung (22) führbar ist und die Packung (22) mittels der Rollen (46, 47, 47) um ihren Mittelpunkt drehbar ist;
(b) die Mittelpunkte der drei Rollen (46, 47, 47) auf den Eckpunkten eines gleichschenkligen spitzwinkligen Dreiecks angeordnet sind;
(c) zwischen den eng benachbarten Rollen (47, 47) eine Ultraschall-Prüfeinrichtung (52, 54, 56) angeordnet ist.

9. Ultraschall-Prüfvorrichtung nach Anspruch 8, bei der eine schräg - insbesondere in einem Winkel von 30° - angeordnete Platte (26) vorgesehen ist, die ein erstes, insbesondere höherliegendes Förderband (20) mit einem zweiten, insbesondere tieferliegenden Transportband (38) so verbindet, daß auf der Oberfläche der Platte (26) die zur Dreheinrichtung geführten Packungen (22, 23) mit ihrer Bodenseite gleitend verschiebbar sind.

10. Ultraschall-Prüfvorrichtung nach einem der Ansprüche 8 und/oder 9, bei der das/ein Transportband (38) Mitnehmer (40) aufweist, die einen solchen Abstand aufweisen, der auf die mit der Ultraschall-Prüfvorrichtung zu prüfenden Packungen (22, 23) abgestimmt ist.

## Claims

1. A method of ultrasonic testing of welds between plastics packages (22, 23) in the form of plates and cover foils (30) for ready-cooked meals, wherein (a) the ultrasonic test device is acoustically coupled to the weld via an initial water flow in the form of a water jet or in a water bath, the weld is periodically irradiated with ultrasonic pulses, and the transmitted ultrasonic pulses are received and their amplitude is evaluated, (b) the ultrasonic jet has a cross-section so small that only the weld region is irradiated, (c) the plastics package (22, 23) and the ultrasonic test device are moved relatively to one another in order to cover the entire length of the weld, (d) the ultrasonic pulse frequency is so chosen that the areas irradiated by the individual ultrasonic pulses overlap, and (e) the packages (22) are transported on a conveyor belt (20) and a baffle or deflector is provided which deflects packages (22) judged to be faulty during the ultrasonic test.

2. A method according to claim 1, characterised in that the plastics package (22, 23) is judged to be faulty if an abrupt change in the ultrasonic signal is detected.

3. A method according to claim 1, characterised in that the packages (22, 23) are round plates which are rotated about their own axis.

4. A method according to claim 1, characterised in that a test sequence is triggered by a control pulse which is received when a package (22, 23) for testing reaches the test device, after which the process is carried out in a single cycle determined by the ultrasonic test device itself.

5. A method according to claim 1, characterised in that the packages (22, 23) under test and conveyed on a belt (20) are deflected by a baffle or deflector (24) out of the direction of conveyance and fall into a funnel or chute leading to the ultrasonic test device, and after being tested, the packages (22, 23) are raised by a lifting device (60) so that they tilt back on to a conveyor belt (20).

6. A method according to claim 1, characterised in that during the test, the ultrasonic test device is moved whereas the plastics package (22, 23) remains motionless.

7. A method according to claim 1, characterised in that the weld is irradiated over an area which is non- round and has a smaller height than width, the width being in the direction of the weld (32).

8. An ultrasonic test device for carrying out the method according to any of the preceding claims to dish-shaped plastics packages (22, 23) in the form of plates with cover foils (30) for ready-cooked meals, wherein
(a) three rollers (46, 47, 48) are so arranged geometrically that the edge of each such plastics package (22) is guidable and the package (22) is rotatable around its centre by the rollers (46, 47, 47);
(b) the centre points of the three rollers (46, 47, 47) are situated at the apices of a sharp-angled isosceles triangle; and
(c) an ultrasonic test device (52, 54, 56) is disposed between the closely-adjacent rollers (47, 47).

9. An ultrasonic test device according to claim 8, in which a plate (26) is disposed at an angle, more especially at an angle of 30°, and connects a first, more especially higher, conveyor belt (20) to a second, more especially lower, conveyor belt (38) in such a manner that the packages (22, 23) guided towards the turning or rotating device are slidable on their lower sides along the surface of the plate (26).

10. An ultrasonic test device according to claim 8 and/or 9, in which the, or a, conveyor belt (38) has cams (40) at a spacing which matches the packages (22, 23) for testing by the ultrasonic test device.

## Revendications

1. Procédé de contrôle par ultra-sons de cordons de soudure entre des emballages en matière plastique (22, 23) en forme de plateaux et des feuilles de fermeture (30) pour des plats préparés, selon lequel (a) le dispositif de contrôle par ultra-sons est couplé acoustiquement au cordon de soudure par une étendue d'eau sous forme d'un courant d'eau ou d'un bain d'eau, le cordon de soudure est traversé périodiquement par des impulsions d'ultra-sons et les impulsions d'ultra-sons traversantes sont reçues et évaluées en amplitude, (b) le faisceau d'ultra-sons présente une section transversale suffisamment étroite pour qu'exclusivement la zone du cordon de soudure soit traversée par les ultra-sons, (c) l'emballage en matière plastique (22, 23) et le dispositif de contrôle par ultrasons sont déplacés l'un par rapport à l'autre pour atteindre le cordon de soudure sur toute sa longueur, (d) la fréquence de succession des impulsions d'ultra-sons est choisie de telle sorte que les zones de traversée d' impulsions d'ultra-sons séparées se recouvrent mutuellement et (e) une chicane est prévue pour les emballages (22) transportés sur un convoyeur à bande (20), chicane qui dévie les emballages (22) jugés défectueux lors du contrôle par ultra-sons.

2. Procédé selon la revendication 1, caractérisé par le fait que l'emballage en matière plastique (22, 23) est considéré comme défectueux lorsqu'un changement brutal du signal d'ultra-sons est perçu.

3. Procédé selon la revendication 1, caractérisé par le fait que les emballages (22, 23) sont des plateaux ronds qui sont mis en rotation autour de leur propre axe.

4. Procédé selon la revendication 1, caractérisé par le fait que le déroulement d'un contrôle est déclenché par une impulsion de commande qui est reçue lorsqu'un emballage (22, 23) à examiner est parvenu dans le dispositif de contrôle, et est ensuite exécuté selon une cadence qui est déterminée par le dispositif de contrôle par ultra-sons lui-même.

5. Procédé selon la revendication 1, caractérisé par le fait que les emballages à contrôler (22, 23) transportés sur un convoyeur à bande (20) sont déviés à l'aide d'une chicane (24) hors de leur direction de transport et tombent dans une trémie d'introduction du dispositif de contrôle par ultra-sons, et par le fait que les emballages contrôlés (22, 23) sont soulevés au moyen d'un dispositif élévateur (60), pour qu'ils basculent à nouveau sur le convoyeur à bande (20).

6. Procédé selon la revendication 1, caractérisé par le fait que lors du contrôle le dispositif de contrôle par ultra-sons est déplacé et l'emballage en matière plastique (22, 23) demeure immobile.

7. Procédé selon la revendication 1, caractérisé par le fait que la traversée du cordon de soudure par les ultrasons se produit selon une zone de traversée qui n'est pas circulaire et qui présente une hauteur plus faible que sa largeur, la direction de la largeur étant orientée suivant le développement du cordon de soudure (32).

8. Dispositif de contrôle par ultra-sons pour la mise en oeuvre du procédé selon l'une des revendications précédentes sur des emballages en matière plastique (22, 23), en coquilles en forme de plateaux avec des feuilles de fermeture (30) pour plats préparés, dans lequel:
(a) trois galets (46, 47, 47) sont disposés géométriquement de telle sorte que le bord, selon le cas, d'un tel emballage en matière plastique (22) peut être guidé et que l'emballage (22) peut tourner à l'aide des galets (46, 47, 47) autour de son centre ;
(b) les centres des trois galets (46, 47, 47) sont disposés aux sommets d'un triangle isocèle à angle aigu ;
(c) un dispositif de contrôle par ultra-sons (52, 54, 56) est disposé entre les galets (47, 47) étroitement voisins.

9. Dispositif de contrôle par ultra-sons selon la revendication 8 dans lequel est prévue une plaque (26) inclinée - en particulier suivant un angle de 30° -, plaque qui établit une liaison entre un premier convoyeur à bande (20), en particulier situé à un plus haut niveau, avec une deuxième bande de transport (38), en particulier située à un niveau plus bas, de telle sorte que les emballages (22, 23) guidés vers le dispositif de mise en rotation peuvent se déplacer en glissant par leur fond sur la surface de la plaque (26).

10. Dispositif de contrôle par ultra-sons selon l'une des revendications 8 et / ou 9, dans lequel la / une bande de transport (38) comporte des éléments d'entraînement (40) qui présentent une distance telle qu'elle est adaptée aux emballages (22, 23) à contrôler avec le dispositif de contrôle par ultra-sons.
